Europäisches Patentamt

European Patent Office

Office européen des brevets

(11) Veröffentlichungsnummer: **0 276 759**

**A1**

## EUROPÄISCHE PATENTANMELDUNG

(21) Anmeldenummer: 88100866.8

(22) Anmeldetag: 21.01.88

(51) Int. Cl.4: **C02F 3/20** , C02F 3/18 , B01F 3/04 , B01F 13/02

(30) Priorität: 30.01.87 DE 3702777

(43) Veröffentlichungstag der Anmeldung:
03.08.88 Patentblatt 88/31

(84) Benannte Vertragsstaaten:
AT CH FR GB IT LI NL SE

(71) Anmelder: Gaspard, Heinz, Dipl.-Ing.
Federburgstrasse 25
D-7980 Ravensburg(DE)

(72) Erfinder: Gaspard, Heinz, Dipl.-Ing.
Federburgstrasse 25
D-7980 Ravensburg(DE)

(74) Vertreter: Patentanwälte Dipl.-Ing. E. Eisele
Dr.-Ing. H. Otten
Seestrasse 42
D-7980 Ravensburg(DE)

(54) Belüftungsvorrichtung für Becken von Klär- oder Wasseraufbereitungsanlagen.

(57) Eine Belüftungsvorrichtung für Becken (1) von Klär-oder Wasseraufbereitungsanlagen mit um eine vertikale Achse rotierenden, von Drucklufterzeugern (11) gespeisten Belüftern (9) wird dadurch kostengünstiger und flexibler in der Anwendung, insbesondere zur Nachrüstung schon vorhandener Becken, daß der Drucklufterzeuger (11) unterhalb des Flüssigkeitsspiegels auf dem Drehgestell (7) angeordnet ist und über Stromabnehmer mit elektrischer Energie versorgt wird.

FIG.1

EP 0 276 759 A1

Die Erfindung betrifft eine Belüftungsvorrichtung für Becken von Klär-oder Wasseraufbereitungsanlagen, die mit zu reinigender Flüssigkeit gefüllt sind, mit von einem Drucklufterzeuger gespeisten Belüftern, die an einem um eine vertikale Achse rotierenden Drehgestell angebracht sind.

Eine Belüftungsvorrichtung dieser Art ist aus der deutschen Offenlegungsschrift 20 23 981 bekannt. Die Belüfterstränge ziehen einen aufgelösten Luftblasenschleier durch das Becken. Somit durchdringen die Luftblasen das Flüssigkeitsvolumen weiträumig verteilt und es ergibt sich ein befriedigender Sauerstoffeintrag.

Der konstruktive Aufwand für eine derartige Installation ist jedoch sehr hoch. Im Vergleich zu der unproblematischen Versorgung mit elektrischem Strom zum Antrieb des Drehgestells betrifft der größte Teil des Installationsaufwandes die Druckluftversorgung der Belüfter. Die Drucklufterzeuger werden wegen ihrer Geräuschemissionen üblicherweise in besonderen, in die Erde eingelassenen Zellen oder Kellern von Betriebsräumen untergebracht. Von dort wird die Druckluft in Rohrleitungen herangeführt. Sie muß über ein technisch verhältnismäßig kompliziertes und störanfälliges Rohrgelenk (Luftabnehmer) auf das rotierende Drehgestell übertragen werden. Aus konstruktiven Gründen erfordert dies meist eine Verlegung der Luftzuleitung unter dem Beckenboden, so daß die Leitung von unten durch die Drehgestellachse aufsteigt.

Somit ist eine nachträgliche Installation einer solchen Belüftungsvorrichtung bei schon vorhandenem Klärbecken normalerweise nicht möglich.

Der Erfindung liegt die Aufgabe zugrunde, eine Belüftungsvorrichtung vorzuschlagen, die wesentlich geringere Investitionskosten erfordert und flexibler in der Anwendung ist. Insbesondere soll sich die Belüftungsvorrichtung dazu eignen, bei schon vorhandenen Becken eingesetzt zu werden, die bisher mit Oberflächenbelüftern belüftet wurden.

Diese Aufgabe wird ausgehend von einer Belüftungsvorrichtung der einleitend bezeichneten Art erfindungsgemäß dadurch gelöst, daß der Drucklufterzeuger unterhalb des Flüssigkeitsspiegels auf dem Drehgestell angeordnet ist und über Stromabnehmer mit elektrischer Energie versorgt wird. Die Druckluft wird also nicht außerhalb, sondern auf dem ständig in Rotation gehaltenen Drehgestell selbst erzeugt. Es kann dazu beispielsweise eine Montageplattform zur Aufnahme eines oder mehrerer Luftverdichter und deren Antriebsmotoren erhalten. Die Drucklufterzeugungsanlage ist leistungsmäßig auf die an dem betreffenden Drehgestell angebrachten Belüfter abgestimmt und diese wiederum sind an den im Becken erforderlichen Sauerstoffbedarf angepaßt.

Statt eines Luftabnehmers, d. h. einer Verbindung zwischen einem feststehenden und einem rotierenden Teil einer Rohrleitung, ist nur ein Stromabnehmer, d. h. eine Bürsten/Schleifring-Anordnung zur Überleitung der elektrischen Versorgungsenergie auf das Drehgestell erforderlich. Ein solcher Stromabnehmer ist auch leichter in den Drehstuhl zu integrieren.

Vor allem aber bietet die Erfindung den Vorteil einer kompakten Geräteeinheit, die serienmäßig und dadurch äußerst rationell hergestellt werden kann und zwar auch im Rahmen eines Bausteinsystems, wobei nur bestimmte Teile größenmäßig bzw. leistungsmäßig gestuft sind, um allen Anforderungen gerecht zu werden.

Eine solche Belüftungsvorrichtung läßt sich auch nachträglich, bzw. im Austausch zu Oberflächenbelüftern, in bestehende Becken einbauen, und zwar sowohl in runde als auch in anders geformte Becken oder zu mehreren in ein größeres Becken. Vielfach sind beckenüberspannende Brücken schon vorhanden, so daß eine nachträgliche Installation ohne Schwierigkeiten und mit geringstem Aufwand durchzuführen ist.

Das Eintauchen des Drucklufterzeugers in die Beckenflüssigkeit hat den Vorteil, daß die entstehende Kompressionswärme an die Flüssigkeit abgeführt wird und die Verdichtergeräusche vermindert werden. Die Gehäuse der Motoren und Kompressoren können unmittelbar mit der Flüssigkeit Kontakt haben. Andererseits ist es aber auch möglich, daß der Drucklufterzeuger insgesamt in einem wasserdichten Gehäuse untergebracht ist, das teilweise oder ganz in die Flüssigkeit eintaucht.

Ausführungsbeispiele der Erfindung werden nachfolgend anhand einer schematischen Zeichnung erläutert. Im einzelnen zeigt

Fig. 1 einen Vertikalschnitt eines runden Belebungsbeckens und einer darin angebrachten Belüftungsvorrichtung,

Fig. 2 eine Draufsicht auf das Drehgestell in kleinerem Maßstab und ohne Antrieb und Brücke und

Fig. 3 einen Axialschnitt einer anderen Trag- und Antriebsvorrichtung für ein Drehgestell.

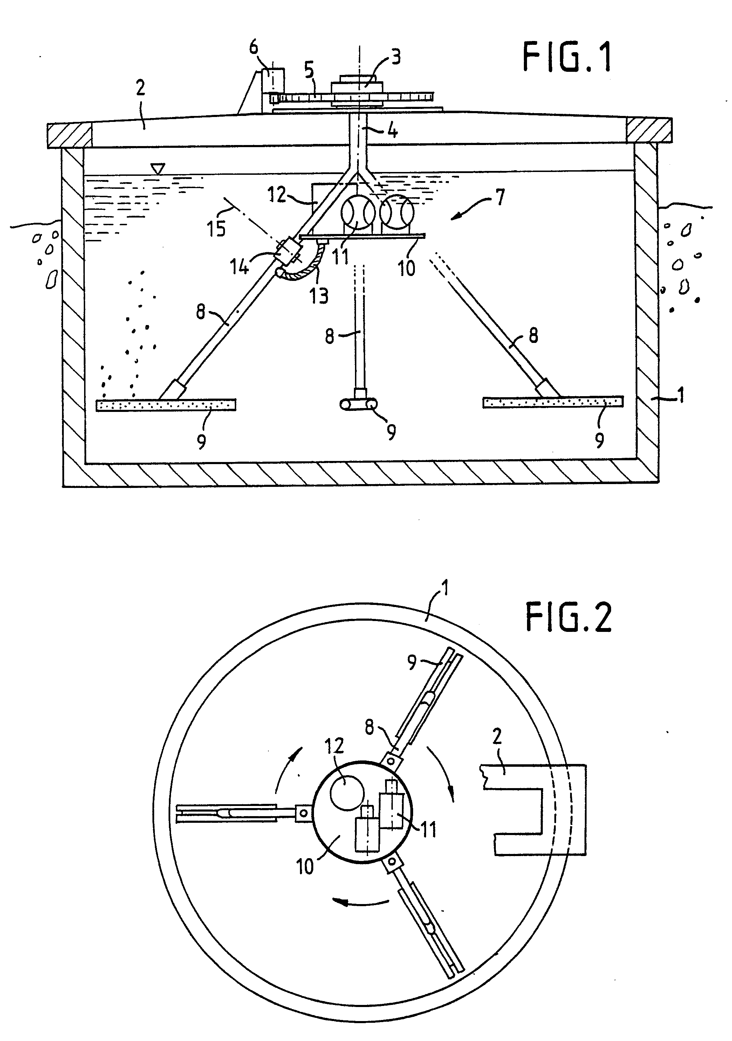

Das in den Figuren 1 und 2 dargestellte runde Belebungsbecken (1) ist teilweise in den Erdboden eingelassen und nahezu bis zum Rand mit Abwasser gefüllt. Eine Brücke (2) aus zwei parallelen Längsträgern überspannt das Becken diametral. Auf der Brücke ist in der Mitte ein vertikales Traglager (3) angeordnet, dessen Drehzapfen (4) zwischen den Längsträgern nach unten greift. An dem Drehzapfen ist ein Zahnkranz (5) befestigt, der von dem Ritzel eines Motors (6) ständig angetrieben wird.

An dem Drehzapfen (4) hängt ein insgesamt mit (7) bezeichnetes Drehgestell, im Beispiel in Form von drei sternförmig angeordneten, schräg nach unten weisenden Holmen, deren untere, als Rohre ausgebildete Abschnitte als Arme (8) bezeichnet sind. An ihren unteren Enden sind sog. Belüfterkerzen (9) horizontal und radial angeordnet. Sie bestehen aus einem porösen Werkstoff und dienen der feinen Verteilung der ihnen durch die Arme (8) zugeführten Druckluft.

In seinem oberen Teil trägt das Drehgestell (7) eine Montagebühne (10), welche samt der darauf installierten Drucklufterzeugungsanlage in das Wasser eingetaucht ist. Der Drucklufterzeuger ist im Beispiel schematisch durch zwei Rotationsverdichter (11) und einen Druckausgleichsbehälter (12) angedeutet. Die Druckluft wird aus diesem Behälter über flexible Schläuche (13) in die Arme (8) eingeleitet. Die Schläuche sind vorgesehen, um die Arme (8) mit Hilfe von Gelenken (14) hochschwenken zu können, deren schräg geneigte Gelenkachsen mit (15) bezeichnet sind. In dem Traglager (3) ist eine zeichnerisch nicht dargestellte Schleifring/Bürsten-Anordnung eingebaut, welche die auf dem Drehgestell (7) angeordneten Motoren und eventuellen andere Stromverbraucher mit elektrischem Strom versorgt.

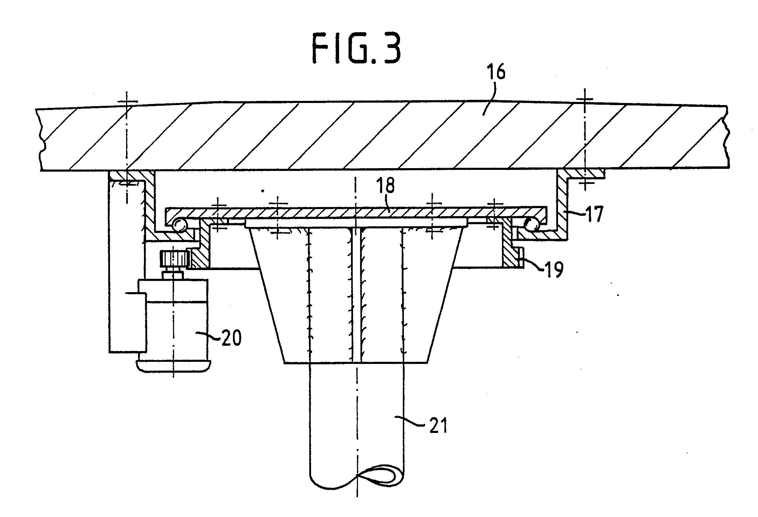

Bei dem Beispiel nach Fig. 3 ist die Brücke (16) als massiver Betonsteg ausgeführt. Das Traglager ist unten angeschraubt. In einem querschnittlich Z-förmigen Tragkranz (17) ist eine Platte (18) drehbar auf Kugeln gelagert. An die Platte ist unten ein Zahnkranz (19) angesetzt, der wie in Fig. 1 von einem Elektromotor (20) angetrieben wird. An die Platte (18) ist der Hals (21) des nicht weiter gezeigten Drehgestells fest angeschraubt.

Die beschriebene Belüftungsvorrichtung kann als Komplettgerät konzipiert und gefertigt werden und ist daher außerordentlich kostengünstig. Der Sauerstoffeintrag dürfte bei etwa 3,0 kg Sauerstoff je kWh liegen.

## Ansprüche

Belüftungsvorrichtung für Becken von Klär-oder Wasseraufbereitungsanlagen, die mit zu reinigender Flüssigkeit gefüllt sind, mit von einem Drucklufterzeuger gespeisten Belüftern, die an einem um eine vertikale Achse rotierenden Drehgestell angebracht sind, dadurch gekennzeichnet, daß der Drucklufterzeuger (11) unterhalb des Flüssigkeitsspiegels auf dem Drehgestell (7) angeordnet ist und über Stromabnehmer mit elektrischer Energie versorgt wird.

FIG.1

FIG.2

# FIG.3

16

18

17

19

20

21

G.1911.

# EUROPÄISCHER RECHERCHENBERICHT

## EINSCHLÄGIGE DOKUMENTE

EP 88100866.8

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP - A1 - 0 163 821 (PASSAVANT) <br><br> * Zusammenfassung * <br><br> -- | 1 | C 02 F 3/20 <br> C 02 F 3/18 <br> B 01 F 3/04 |
| A | US - A - 4.267 052 (CHANG) <br><br> * Zusammenfassung * <br><br> -- | 1 | B 01 F 13/02 |
| A | US - A - 4 228 112 (HISE) <br><br> * Zusammenfassung * <br><br> ---- | 1 | |

**RECHERCHIERTE SACHGEBIETE (Int. Cl.4)**

C 02 F
B 01 F

Der vorliegende Recherchenbericht wurde für alle Patentansprüche erstellt.

| Recherchenort | Abschlußdatum der Recherche | Prüfer |
|---|---|---|
| WIEN | 18-04-1988 | WILFLINGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82